Europäisches Patentamt

European Patent Office

Office européen des brevets

(19)

(11) **EP 0 900 495 B1**

(12) **EUROPÄISCHE PATENTSCHRIFT**

(45) Veröffentlichungstag und Bekanntmachung des Hinweises auf die Patenterteilung:
**16.04.2003 Patentblatt 2003/16**

(21) Anmeldenummer: 97923819.3

(22) Anmeldetag: **15.05.1997**

(51) Int Cl.$^7$: **H04N 1/40**

(86) Internationale Anmeldenummer:
**PCT/DE97/00981**

(87) Internationale Veröffentlichungsnummer:
**WO 97/046003 (04.12.1997 Gazette 1997/52)**

(54) **VERFAHREN ZUM WEISSABGLEICH**

WHITE BALANCING METHOD

PROCEDE D'EQUILIBRAGE DES BLANCS

(84) Benannte Vertragsstaaten:
**DE FR GB IT NL**

(30) Priorität: **29.05.1996 DE 19621458**

(43) Veröffentlichungstag der Anmeldung:
**10.03.1999 Patentblatt 1999/10**

(73) Patentinhaber: **Heidelberger Druckmaschinen Aktiengesellschaft
69115 Heidelberg (DE)**

(72) Erfinder:
• **HEUER, Axel
D-24253 Fahren (DE)**
• **SUHR, Holger
D-24149 Kiel (DE)**

(56) Entgegenhaltungen:
**WO-A-90/13199        WO-A-92/04799
GB-A- 2 148 658        US-A- 5 414 535**

**Beschreibung**

Die Erfindung bezieht sich auf das Gebiet der elektronischen Reproduktionstechnik und betrifft ein Verfahren zum Weißabgleich bei Farbabtastgeräten, auch Farbscanner genannt, zur punkt- und zeilenweisen Abtastung von Farbvorlagen mittels eines optoelektronischen Farb-Abtastorgans.

Bei einem Farbscanner wird das von der Farbvorlage kommende Abtastlicht zunächst mittels dichroitischer Filter in die Farbanteile "Rot", "Grün" und "Blau" zerlegt und den einzelnen Farbkanälen zugeführt, in denen dann die drei Farbanteile des Abtastlichtes mittels optoelektronischer Wandler in die Farbsignale für "Rot", "Grün" und "Blau" umgewandelt werden.

Die Farbsignale werden in den optoelektronischen Wandlern nachgeschalteten Signalaufbereitungs-Stufen weiterverarbeitet. Die Signalaufbereitungs-Stufen weisen einen definierten Signal-Eingangsbereich auf, dessen Signal-Eckwerte mit Weißpegel und mit Schwarzpegel bezeichnet werden.

Durch einen Weißabgleich eines Farbscanners vor Abtastbeginn wird der Dicheumfang der jeweils abzutastenden Farbvorlage an den definierten Signal-Eingangsbereich der Signalaufbereitungs-Stufen angepaßt. Dadurch wird erreicht, daß das von der hellsten Stelle der abzutastenden Farbvorlage, dem Weißpunkt, kommende Abtastlicht in dem optoelektronischen Wandler in einen Farbsignalwert umgesetzt wird, der dem Weißpegel entspricht.

Da das von der hellsten Stelle der Farbvorlage kommende Abtastlicht von Farbvorlage zu Farbvorlage variiert und die Empfindlichkeit des optoelektronischen Wandlers über einen längeren Zeitraum nicht konstant ist, wird in der Praxis vor jeder Vorlagenabtastung ein entsprechender Weißabgleich durchgeführt, der aufwendig ist, da mindestens drei optoelektronische Wandler abzugleichen sind.

In der DE-A-25 45 961 wird bereits ein Verfahren zum automatischen Weißabgleich von Scannern angegeben. In einer Eichphase wird das Abtastorgan eines Schwarz/Weiß-Scanners auf dem jeweiligen Weißpunkt der Bildvorlage positioniert und das vom angefahrenen Weißpunkt kommende Abtastlicht in dem optoelektronischen Wandler in einen Bildsignal-Istwert umgesetzt. Der Bildsignal-Istwert wird in einer Regelungseinrichtung mit einem Bildsignal-Sollwert verglichen, der dem Weißpegel entspricht. Ein Steuersignal ändert die Empfindlichkeit des optoelektronischen Wandlers und/oder die Verstärkung eines nachgeschalteten Verstärkers solange, bis die Regelabweichung Null ist. Der dazu notwendige Steuersignalwert wird für die Dauer der sich an die Eichphase anschließende Vorlagenabtastung gespeichert. Zum Weißabgleich bei Farbscannern ist die Regeleinrichtung auf die drei Farbkanäle erweitert.

Das bekannte Verfahren hat den Nachteil, daß beim Weißabgleich immer ein entsprechender Weißpunkt auf der zu reproduzierenden Bildvorlage mit dem Farb-Abtastorgan angefahren werden muß, was zeitraubend und, insbesondere bei Wiederholungen des Weißabgleichs, ungenau ist. Hinzu kommt, daß in einer farbigen Bildvorlage oft keine als Weißpunkt geeignete helle Bildstelle vorhanden ist.

In der EP-A-0 281 659 wird ein weiteres Verfahren zum Weißabgleich von Scannern angegeben, bei dem das wiederholte Anfahren eines Weißpunktes mit dem Farb-Abtastorgan auf einer zu reproduzierenden Bildvorlage vermieden wird. Dazu wird beim erstmaligen Weißabgleich ein Lichtabschwächungsfaktor durch optoelektronische Abtastung des Weißpunktes ermittelt. Bei Wiederholungen des Weißabgleichs wird ohne erneute Abtastung des Weißpunktes in der Bildvorlage das von dem Weißpunkt kommende Abtastlicht durch das entsprechend dem ermittelten Lichtabschwächungsfaktor abgeschwächte Licht der Lichtquelle simuliert, wobei die Lichtabschwächung mittels einer gesteuerten Irisblende vorgenommen wird.

Das bekannte Verfahren ist aufwendig und basiert auf einer farbneutralen Dichtesimulation, was in der Praxis nicht immer gegeben ist und daher gelegentlich zu unbefriedigenden Ergebnissen führen kann. Desweiteren ist bei dem bekannten Verfahren keine Dichtesimulation bei Abtastung von Aufsichtsvorlagen möglich, da die Irisblende zur richtigen Einstellung der Tiefenschärfe benötigt wird.

Aufgabe der vorliegenden Erfindung ist es daher, ein Verfahren zum Weißabgleich bei einem Farbabtastgerät zur punkt- und zeilenweisen, optoelektronischen Abtastung von Farbvorlagen derart zu verbessern, daß eine einfache, kostengünstige und farbneutrale Simulation der optische Dichten von Weißpunkten in den Farbvorlagen und damit eine hohe Reproduktionsqualität erreicht wird.

Diese Aufgabe wird durch die Merkmale des Anspruchs 1 gelöst. Vorteilhafte Ausgestaltungen und Weiterbildungen sind in den Unteransprüchen angegeben.

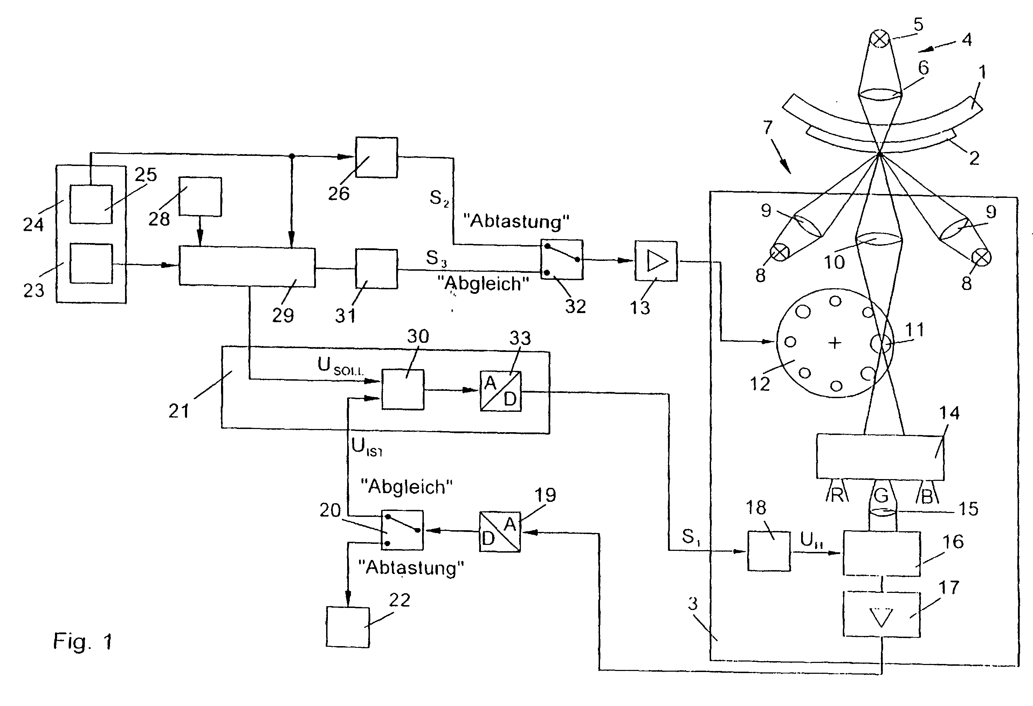

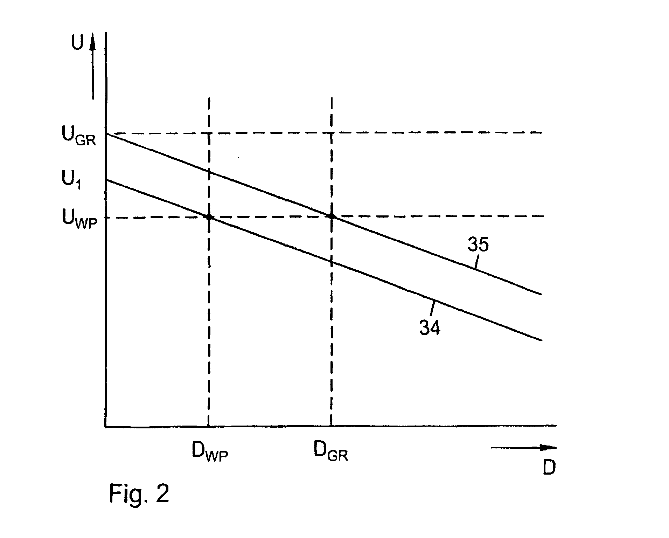

Die Erfindung wird nachfolgend anhand der Fig. 1 und 2 näher erläutert.

Es zeigen:

Fig. 1 ein prinzipielles Blockschaltbild eines Farbscanners mit einer Einrichtung zur Durchführung eines Weißabgleiches und

Fig. 2 eine grafische Darstellung zur Erläuterung des Weißabgleiches.

Fig. 1 zeigt ein prinzipielles Blockschaltbild eines Farbscanners mit einer Einrichtung zum Weißabgleich. Auf einer ausschnittsweise dargestellten aus Klarglas bestehenden Abtasttrommel (1) ist eine Farbvorlage (2) in Form einer Aufsichtsoder Durchsichts-Farbvorlage angeordnet, die von einem optoelektronischen Farb-Abtastorgan (3) punkt- und zeilenweise abgetastet wird.

Zur punktweisen Beleuchtung einer Durchsichts-Farbvorlage (2) ist im Innenraum der Abtasttrommel (2) eine Durchsichts-Beleuchtungseinrichtung (4) mit einer Lichtquelle (5) und einer Optik (6) vorgesehen. Zur punktweisen Beleuchtung einer Aufsichts-Farbvorlage (2) befindet sich im optoelektronischen Farb-Abtastorgan (3) eine Aufsichts-Beleuchtungseinrichtung (7) mit zwei Lichtquellen (8) und zwei Optiken (9).

Das durch die Durchsichts-Farbvorlage (2) durchgelassene oder von der Aufsichts-Farbvorlage (2) reflektierte Abtastlicht, das entsprechend den Helligkeiten der in der Farbvorlage (2) abgetasteten Bildpunkte helligkeitsmoduliert ist, gelangt in das optoelektronische Farb-Abtastorgan (3). Das Abtastticht wird dort mittels eines Abtastobjektivs (10) auf eine Scanblende (11) eines Blendenrades (12) fokussiert. Das Blendenrad (12) weist eine Vielzahl von Scanblenden (11) mit unterschiedlichen Durchmessern auf. Das Blendenrad (12) ist rotationsfähig gelagert und wird von einer Blendenansteuerung (13) derart positioniert, daß jeweils eine entsprechend der gewünschten Abtastfeinheit ausgewählte Scanblende (11) des Blendenrades (12) im Strahlengang liegt. Hinter dem Blendenrad (12) ist ein Farbteiler (14) angeordnet, der das Abtastlicht in drei Farbanteile "Rot" (R), "Grün" (G) und "Blau" (B) zerlegt und drei separaten Farbkanälen "Rot", "Grün" und "Blau" zuführt. Der Farbteiler besteht beispielsweise aus farbselektiven Spiegeln. In den drei Farbkanälen "Rot", "Grün" und "Blau", von denen nur der Farbkanal "Grün" dargestellt ist, werden die Farbanteile "Rot", "Grün" und "Blau" in drei analoge Farbsignale (R, G, B) umgewandelt.

In dem dargestellten Farbkanal "Grün" wird der entsprechende Farbanteil durch eine Kollimationsoptik (15) auf eine Licht/Spannungs-Wandlereinrichtung geleitet, die in dem Ausführungsbeispiel aus einem Photomultiplier (16) mit einem nachgeschalteten Strom/Spannungs-Wandler (17) besteht. Der Strom/Spannungs-Wandler (17) wandelt den Ausgangsstrom des Photomultipliers (16) in ein analoges Farbsignal (G) um. Der Photomultiplier (16) hat einen Aussteuerungsbereich von Null bis zu einem maximalen Grenzwert $U_{GR}$. Die zum Betrieb des Photomultipliers (16) benötigte Hochspannung $U_H$ wird in einem Hochspannungs-Generator (18) erzeugt, der von einem Steuersignal $S_1$ gesteuert wird. Das in dem Strom/Spannungs-Wandler (17) erzeugte analoge Farbsignal (G) wird in einem A/D-Wandler (19) in digitale Farbwerte (G) umgewandelt.

Dem A/D-Wandler (17) ist ein Umschalter (20) mit den Schaltstellungen "Abgleich" und "Abtastung" nachgeschaltet. Während eines Weißabgleichs des Farbscanners befindet sich der Umschalter (20) in der Schaltstellung "Abgleich", in der ein für den Weißabgleich repräsentativer Farbwert (G) als Spannungs-Istwert $U_{IST}$ einer Steuersignal-Stufe (21) zugeführt wird. Während der Vorlagenabtastung befindet sich der Umschalter (20) in der Schaltstellung "Abtastung", in der die Farbwerte (G) der Farbvorlage (2) zur Weiterverarbeitung einer Bildbearbeitungs-Stufe (22) zugeführt werden.

Die nicht dargestellten Farbkanäle "Rot" und "Blau" sind identisch aufgebaut und weisen jeweils einen Photomultiplier, einen Strom/Spannungs-Wandler, einen A/D-Wandler, einen Umschalter und eine Steuersignal-Stufe auf. Die in den Farbkanälen "Rot" und "Blau" erzeugten Farbwerte (R, B) werden ebenfalls an die Bildbearbeitungs-Stufe (22) zur Weiterverarbeitung geleitet.

Die logarithmierten Farbwerte (R, G, B) repräsentieren die optischen Dichten der Farbanteile der in der Farbvorlage (2) abgetasteten Bildpunkte.

Vor der Vorlagenabtastung wird der Weißabgleich durchgeführt, durch den erreicht wird, daß das Farb-Abtastorgan (3) während der Vorlagenabtastung bei Abtastung des Weißpunktes der Farbvorlage (2) Farbwerte (R, G, B) erzeugt, die den für die einzelnen Farbkanäle vorgegebenen oder einem gemeinsamen Weißpegel entsprechen. Beim Weißabgleich werden die optischen Dichten $D_{WP}$ des Weißpunktes simuliert, ohne daß während des Weißabgleichs der echte Weißpunkt in der Farbvorlage (2) mit dem Farb-Abtastorgan (3) angefahren und abgetastet werden muß. Erfindungsgemäß erfolgt die Simulation der optische Dichte $D_{WP}$ des Weißpunktes der Farbvorlage (2) durch eine entsprechende Einstellung der Verstärkung der Licht/Spannungs-Wandlereinrichtung (16, 17) ("elektrischen Dichtesimulation") und/oder durch eine entsprechende Abschwächung des in der Beleuchtungseinrichtung (4, 7) simulierten Abtastlichtes mit einer der als Abgleichblende verwendeten Scanblenden (11) des Blendenrades (12) ("optische Dichtesimulation").

Das erfindungsgemäße Verfahren zum Weißabgleich wird nachfolgend anhand der Verfahrensschritte **[A]**, **[B]** und **[C]** für einen der drei Farbkanäle näher erläutert.

In dem ersten Verfahrensschritt **[A]** des Weißabgleichs wird ein Spannungs-Sollwert $U_{SOLL}$ für den betreffenden Farbkanal aus der zuvor ermittelten optischen Dichte $D_{WP}$ des Weißpunktes der Farbvorlage (2) und dem vorgegebenen Weißpegel $U_{WP}$ für eine "elektrischen Dichtesimulation" durch Einstellung der Verstärkung der einzelnen Licht/Spannungs-Wandlereinrichtungen (16, 17) ermittelt. Gegebenenfalls wird für eine "optischen Dichtesimulation" durch Lichtabschwächung des von der Durchsichts-Beleuchtungseinrichtung (4) simulierten Abtastlichtes eine der vorhandenen Scanblenden (11) des Blendenrades (12) ausgewählt und für die Dauer des Weißabgleichs als Abgleichblende in dem Strahlengang des Farb-Abtastorgans (3) positioniert.

Die optischen Dichten $D_{WP}$ des Weißpunktes einer abzutastenden Farbvorlage (2) werden vor dem Weißabgleich durch eine manuelle densimetrische Messung des Weißpunktes in der Farbvorlage (2) oder durch eine automatische Analyse des Bildumfanges der Farbvorlage (2) beispielsweise nach der DE-A-43 09 879 ermittelt. Die ermittelten optischen Dichten $D_{WP}$ des Weißpunktes, auch Eichwerte genannt, werden in einem Eichwert-Speicher (23) einer Eingabe-Stufe (24) gespeichert. In dem Eichwert-Speicher (23) können die optischen Dichten der Weißpunkte mehrerer Farbvorlagen, die nacheinander abgetastet werden sollen, abrufbar gespeichert werden. Eine Eingabe-Stufe (24) enthält außerdem einen Paramerter-Speicher (25), in dem Blenden-Parameter für die Scanblenden (11) des Blendenrades (12) gespeichert sind. Die Blenden-Parameter der bei der Abtastung der Farbvorlage (2) zu verwendenen Scanblende (11) des Blendenrades (12) werden in einer Scanblenden-Vorgabe (26) in ein entsprechende Steuersignal $S_2$ umgewandelt, welches über einen Umschalter (27) in der Schaltstellung "Abtastung" der Blendenansteuerung (13) zugeführt wird. Die Blendenansteuerung (13) positioniert dann die ausgewählte Scanblende (11) des Blendenrades (12) für die Dauer des Abtastvorganges im Strahlengang des Farb-Abtastorgans (3).

In einem Tabellen-Speicher (28) sind in Form einer Blendendichte-Tabelle für jede Scanblende (11) des Blendenrades (12) drei zuvor ermittelte relative Blendendichten $D_{BL}$ für die drei Farbkanäle "Rot", "Grün" und "Blau" angegeben. Die Scanblenden (11) sind durch Blenden-Kennummern gekennzeichnet. Die Blendendichte $D_{BL}$ einer Scanblende (1) ist jeweils ein Maß für die mit der betreffenden Scanblende (11) erreichte Lichtabschwächung.

Die relativen Blendendichten $D_{BL}$ der Blendendichte-Tabelle werden vor dem Weißabgleich aus dem Verhältnis der Blendendichten der verschiedenen Scanblenden (11) des Blendenrades (12) zu der Blendendichte einer als Referenzblende ausgewählten Scanblende (11) bestimmt. Zur Ermittlung der Blendendichten werden zunächst mit einer über die Hochspannung $U_H$ gering eingestellten Verstärkung des Photomultipliers (16) die bei den einzelnen Scanblenden (11) des Blendenrades (12) erreichten Spannungen am Ausgang des Strom/Spannungs-Wandlers (17) gemessen und diejenige Scanblende (11), welche die größere Spannung ergibt, als Referenzblende definiert. Die als Referenzblende ermittelte Scanblende (11) wird in den Strahlengang des Farb-Abtastorgans (3) gebracht. Mit der Referenzblende wird dann, wie später im Verfahrensschritt [C] beschrieben, ein Geräteabgleich vorgenommen, indem die Verstärkung des Photomultipliers (16) durch einen Regelvorgang derart eingestellt wird, daß die Ausgangsspannung einem vorgegebenen Sollwert entspricht. Mit dieser Einstellung werden dann für alle Scanblenden (11) des Blendenrades (12) die Blendendichtewerte als logarithmierte Ausgangsspannungen gemessen und ins Verhältnis zu der Blendendichte der Referenzblende gesetzt, um die relativen Blendendichten $D_{BL}$ für die Blendendichte-Tabelle zu erhalten.

Durch die Verwendung von relativen Blendendichten anstatt von absoluten Blendendichten ergibt sich eine hohe Abgleichgenauigkeit. Mögliche Inhomogenitäten der Photokathode des Photomultipliers und der Abtastbeleuchtung sowie andere störende Effekte, die zu Farbstichen oder einer ungenauen Dichtesimulation führen würden, werden in vorteilhafter Weise miterfaßt.

Ein Beispiel für eine Blendendichte-Tabelle ist nachfolgend wiedergegeben:

| Blenden-Kennummer | rel. Blendendichte $D_{BL}$ für "Rot" | rel. Blendendichte $D_{BL}$ für "Grün" | rel. Blendendichte $D_{BL}$ für "Blau" |
|---|---|---|---|
| 1 | 0,7806 | 0,7826 | 0,7810 |
| 2 | 0,6095 | 0,6104 | 0,6100 |
| 3 | 0,4928 | 0,4935 | 0,4923 |
| 4 | 0,3081 | 0,3088 | 0,3085 |
| 5 Referenzblende | 0 | 0 | 0 |
| 6 | 0,1337 | 0,1335 | 0,1339 |
| 7 | 0,2192 | 0,2251 | 0,2602 |

Die aktuelle optische Dichte $D_{WP}$ des Weißpunktes der Farbvorlage (2) wird für den betreffenden Farbkanal aus dem Eichwert-Speicher (23) der Eingabe-Stufe (24) in eine Rechen-Stufe (29) übertragen. Der Rechen-Stufe (29) werden außerdem noch die in dem Parameter-Speicher (25) der Eingabe-Stufe (24) gespeicherten Blenden-Parameter und die in dem Tabellen-Speicher (28) abgelegten relativen Biendendichten $D_{BL}$ der verschiedenen Scanblenden (11) des Blendenrades (12) zugeführt.

In der Rechen-Stufe (29) wird der Spannungs-Sollwert $U_{SOLL}$ für den betreffenden Farbkanal für die "elektrische Dichtesimulation" ermittelt, der einem digitalen Vergleicher (30) in der Steuerungs-Stufe (21) zugeführt wird. Gleichzeitig wir in der Rechen-Stufe (28) die zur Lichtabschwächung erforderliche Abgleichblende für die die "optische Dichtesimulation" festgestellt. Die Blenden-Kennummer der als Abgleichblende ermittelten Scanblende (11) des Blendenrades (12) wird einer Abgleichblenden-Vorgabe (31) übermittelt, welche die Blenden-Kennummer in ein entspre-

chendes Steuersignal $S_3$ umwandelt. Das Steuersignal $S_3$ gelangt über den Umschalter (27) in der Schaltstellung "Abgleich" an die Blendenansteuerung (13), welche die entsprechende Scanblende (11) des Blendenrades (12) als Abgleichblende für die Dauer des Weißabgleichs in dem Strahlengang des Farb-Abtastorgans (3) positioniert.

In der Rechen-Stufe (29) werden folgende Berechnungen durchgeführt.

Der optische Dichtewert $D_{WP}$ des Weißpunktes der Farbvorlage (2) für den betreffenden Farbkanal wird zunächst mit einer Grenzdichte $D_{GR}$ verglichen. Die Grenzdichte $D_{GR}$ legt die maximale optische Dichte $D_{WP}$ des Weißpunktes fest, für die eine reine "elektrische Dichtesimulation" durch Einstellung der Verstärkung des Photomultipliers (15) durchgeführt werden kann. Die Grenzdichte $D_{GR}$ ergibt sich aus dem logarithmischen Verhältnis des maximalen Spannungswertes $U_{GR}$ des Austeuerungsbereiches des Photomultipliers (15) zu dem festgelegten Weißpegel $U_{WP}$ entsprechend Gleichung [1].

$$D_{GR} = \log U_{GR}/U_{WP} \qquad\qquad [1]$$

mit

$D_{GR} =$ Grenzdichte eines Farbkanals
$U_{GR} =$ maximaler Spannungswert des Aussteuerungsbereiches in dem Farbkanal und
$U_{WP} =$ Weißpegel des Farbkanals

Der Spannungs-Sollwert $U_{SOLL}$ für den betreffenden Farbkanal bei einer "elektrischen Dichtesimulation" ergibt sich nach der allgemeinen Gleichung [2].

$$U_{SOLL} = U_{WP} \times 10 \exp [D_{WP} - (D_{AB} - D_{SC})] \qquad\qquad [2]$$

mit

$U_{SOLL} =$ Spannungs-Sollwert für einen Farbkanal
$U_{WP} =$ Weißpegel des Farbkanals
$D_{WP} =$ optische Dichte des Weißpunktes für den Farbkanal
$D_{AB} =$ Abgleichblendendichte für den Farbkanal und
$D_{SC} =$ Scanblendendichte

Ist der optische Dichtewert $D_{WP}$ des Weißpunktes der Farbvorlage (2) kleiner als der Grenzdichte $D_{GR}$, wird eine reine "elektrische Dichtesimulation" durchgeführt. Eine zusätzliche "optische Dichtesimulation" entfällt. Die Abgleichblende für den Weißabgleich entspricht der Scanblende für den Abtastvorgang. Damit ist $D_{AB} = D_{SC}$, und Gleichung [2] vereinfacht sich zu Gleichung [3].

$$U_{SOLL} = U_{WP} \times 10 \exp [D_{WP}] \text{ für } D_{WP} < DGR \qquad\qquad [3]$$

In einem ersten Beispiel möge die maximale Spannung des Aussteuerungsbereiches $U_{GR}$ = 10 V, der Weißpegel $U_{WP}$ = 6 V und die optische Dichte des Weißpunktes einer Farbvorlage $D_{WP}$ = 0,15 betragen.

Nach Gleichung [1] ist die Grenzdichte $D_{GR} = \log U_{GR}/U_{WP} = \log 10/6 = 0,22$ und die optische Dichte des Weißpunktes mit $D_{WP}$ = 0,15 kleiner als die Grenzdichte $DGR$ = 0,22.

In diesem Fall ergibt sich nach Gleichung [3] der für die "elektrische Dichtesimulation" erforderliche Spannungs-Sollwert $U_{SOLL} = U_{WP} \times 10 \exp [D_{WP}] = 6 \times 10 \exp [0,15] = 8,475$ V.

Ist der optische Dichtewert $D_{WP}$ des Weißpunktes größer als der Grenzdichte $D_{GR}$, muß außer der "elektrischen Dichtesimulation" eine zusätzliche "optische Dichtesimulation" für die die Grenzdichte $DGR$ überschreitende optische Dichte $D_{WP}$ des Weißpunktes der Farbvorlage (2) durchgeführt werden.

Je näher der Weißpegel $U_{WP}$ an dem maximalen Spannungswert $U_{max}$ des Aussteuerungsbereiches liegt, desto geringer ist die Grenzdichte $D_{GR}$ für die "elektrische Dichtesimulation" und der Anteil der "optischen Dichtesimulation" steigt, bis bei Gleichheit von Weißpegel $U_{WP}$ und maximaler Spannung $U_{GR}$ ausschließlich die "optische Dichtesimulation" durchgeführt wird.

Die Abgleichdichte $D_O$ für die "optische Dichtesimulation" ergibt sich aus der Differenz zwischen der optischen Dichte $D_{WP}$ des Weißpunktes und der Grenzdichte $D_{GR}$ nach Gleichung [3].

$$D_O = D_{WP} - D_{GR} \qquad\qquad [3]$$

Aus der in dem Tabellen-Speicher (28) abgelegten Blendendichte-Tabelle werden für die einzelnen Farbkanäle "Rot", "Grün" und "Blau" jeweils diejenigen Abgleichblenden ausgewählt, deren größere zugehörigen relativen Blendendichten $D_{BL}$ jeweils mindestens einen Dichteabstand von der Größe der Abgleichdichte $D_O$ zu der Blendendichte $D_{BL}$ der aktuellen Scanblende (11) aufweisen.

Da die erforderlichen relativen Blendendichten $D_{BL}$ für die drei Farbkanäle nicht immer in der Blendendichten-Tabelle vorhanden sind, wird eine exakte Anpassung über korrigierte Spanungs-Sollwert $U_{SOLL}$ für die drei Farbkanäle vorgenommen, die nach Gleichung [4] berechnet werden.

$$U_{SOLL} = U_{WP} \times 10 \exp [D_{WP} - (D_{AB} - D_{SC})] \qquad \text{für } D_{WP} > D_{GR} \qquad [4]$$

mit

$U_{SOLL}$ = Spannungs-Sollwert für einen Farbkanal
$U_{WP}$ = Weißpegel des Farbkanals
$D_{WP}$ = optische Dichte des Weißpunktes für den Farbkanal
$D_{AB}$ = Abgleichblendendichte des Farbkanals und
$D_{SC}$ = Scanblendendichte

Der für den Farbkanal "Grün" errechnete Spannungs-Sollwert $U_{SOLL}$ wird wiederum an den digitalen Vergleicher (30) in der Steuerungs-Stufe (21) weitergeleitet, während über die Abgleichblenden-Vorgabe (31) die als Abgleichblende zu verwendende Scanblende (11) in den Strahlengang des Farb-Abtastorgans (3) eingeschwenkt wird.

In einen zweiten Beispiel möge die maximale Spannung des Austeuerungsbereiches wiederum UGR = 10 V und der Weißpegel $U_{WP}$ = 6 V betragen. Die optische Dichte des Weißpunktes einer Farbvorlage möge gegenüber dem ersten Beispiel dagegen $D_{WP}$ = 0,35 und damit größer als die Grenzdichte $D_{GR}$ = 0,22 sein. Als aktuelle Scanblende soll die in der Blendendichte-Tabelle mit der Kennnummer "6" versehene Scanblende mit $D_{BL}$ = 0,1337 für den Farbkanal "Rot" $D_{BL}$ = 0,1335 für den Farbkanal "Grün" und $D_{BL}$ = 0,1339 für den Farbkanal "Blau" verwendet werden.

Nach Gleichung [3] ist die Abgleichdichte $D_O$ = 0,35 - 0,22 = 0,13. In diesem Fall wird als Abgleichblende die mit der Kennummer "4" versehene Scanblende mit $D_{BL}$ = 0,3081 für den Farbkanal "Rot" $D_{BL}$ = 0,3088 für den Farbkanal "Grün" und $D_{BL}$ = 0,3085 für den Farbkanal "Blau" aus der Blendendichte-Tabelle ausgewählt, da die relativen Blendendichten $D_{BL}$ der Abgleichblende einen minimalen Dichteabstand von $D_0$ = 0,13 zu der Scanblende aufweisen.

Mit den Blendendichten $D_{BL}$ der Abgleichblende ergeben sich dann die Spannungs-Sollwerte $U_{SOLL}$ für die drei Farbkanäle nach Gleichung [4].

$U_{SOLL}$ = 6 x 10 exp. [0,35 - (0,3081 - 0,1337)] = 8,99 für den Farbkanal "Rot"
$U_{SOLL}$ = 6 x 10 exp. [0,35 - (0,3088 - 0,1335)] = 8,97 für den Farbkanal "Grün"
$U_{SOLL}$ = 6 x 10 exp. [0,35 - (0,3085 - 0,1339)] = 8,98 für den Farbkanal "Blau"

In dem zweiten Verfahrensschritt **[B]** des Weißabgleichs wird das Farb-Abtastorgan (3) manuell in der Weise zu der Abtasttrommel (1) positioniert, daß es einen Ort außerhalb der Farbvorlage (2) abtastet. In dieser Position gelangt das von der Lichtquelle (5) simulierte Abtastlicht durch das Klarglas der Abtasttrommel (1) direkt in das Farb-Abtastorgan (3), wobei das von der Lichtquelle (5) simulierte Abtastlicht eine optische Dichte Null repräsentiert.

Findet keine "optische Dichtesimulation" statt, gelang das von der Lichtquelle (5) simulierte Abtastlicht durch die für den Abtastvorgang vorgesehene Scanblende (11) ungeschwächt auf den Photomultiplier (15). Findet dagegen eine "optische Dichtesimulation" statt, wird das simulierte Abtastlicht zunächst durch eine Abgleichblende, die kleiner als die entsprechende Scanblende ist, auf die erforderliche optische Dichte abgeschwächt, und das abgeschwächte Abtastlicht gelangt auf den Photomultiplier (15).

In dem dritten Verfahrensschritt **[C]** des Weißabgleichs wird anhand des ungeschwächten oder des gegebenenfalls durch eine Abgleichblende abgeschwächten Lichts der Lichtquelle (5) die Verstärkung des Photomultipliers (16) über das Steuersignal $S_1$ und die Hochspannung $U_H$ derart eingestellt, daß die Amplitude des Farbsignals bei der späteren Abtastung des Weißpunktes der Farbvorlage (2) dem Weißpegel $U_{WP}$ entspricht.

Zur Einstellung der Verstärkung des Photomultipliers (16) wird der Farbsignal-Istwert $U_{IST}$ einem ersten Eingang des digitalen Vergleichers (30) in der Steuersignal-Stufe (21) zugeführt. Der zweite Eingang des digitalen Vergleichers (30) ist mit dem im Verfahrensschritt [A] berechneten Spannungs-Sollwert $U_{SOLL}$ beaufschlagt. Der durch den Vergleich von Spannungs-Istwert $U_{IST}$ und Spannungs-Sollwertwert $U_{SOLL}$ gebildete digitale Vergleichswert wird in einem nachfolgenden D/A-Wandler (33) in das analoges Steuersignal $S_1$ für den Hochspannungs-Generator (18) umgewandelt. In Abhängigkeit von dem Vorzeichen des Steuersignals $S_1$ wird die Verstärkung des Photomultipliers (16) über die Hochspannung $U_H$ solange erhöht oder erniedrigt, bis der Spannungs-Istwert $U_{IST}$ gleich dem Spannungs-Sollwert $U_{SOLL}$ beim Steuersignal $S_1 = 0$ ist, womit der Weißabgleich abgeschlossen ist.

Für die Dauer der nach dem Weißabgleich durchgeführten Abtastung der Farbvorlage (2) wird die beim Steuersignal $S_1 = 0$ erreichte Verstärkung des Photomultipiiers (16) durch Speicherung eines entsprechenden Hochspannungswertes in dem Hochspannungsgenerator (18) konstant gehalten. Außerdem wird die der gewünschten Abtastfeinheit entsprechende Scanblende (11) des Blendenrades (12) in den Strahlengang eingeschwenkt.

Fig. 2 zeigt eine grafische Darstellung zur Erläuterung der "elektrische Dichtesimulation". Auf der Abzisse sind charakteristischen Dichtewerte D wie die optische Dichte $D_{WP}$ des Weißpunktes der Farbvorlage und die Grenzdichte $D_{GR}$ für eine "elektrische Dichtesimulation" aufgetragen. Auf der Ordinate sind charakteristische Spannungswerte U am Ausgang des Photomultipliers wie die maximale Spannung $U_{GR}$ des Aussteuerungsbereiches und der Weißpegel $U_{WP}$ aufgetragen. Der Dichtebereich von $D_O = 0$ bis $D_O = D_{GR}$ kennzeichnet den Bereich, in dem eine "elektrischen Dichtesimulation" stattfindet. Je näher der Weißpegel $U_{WP}$ an der maximalen Spannung $U_{max}$ des Aussteuerungsbereiches liegt, desto geringer ist die Grenzdichte $D_{GR}$ für eine "elektrische Dichtesimulation", bis bei Gleichheit von Weißpegel $U_{WP}$ und maximaler Spannung $U_{max}$ keine "elektrische Dichtesimulation" mehr möglich ist. Wird beim Weißabgleich auf das Klarglas der Abtasttrommel ($D_O = 0$) auf eine Spannung $U_1$ abgeglichen, so ergibt sich aufgrund des Verlaufes der Abgleichgeraden (34) bei Abtastung des Weißpunktes der Farbvorlage (2) mit der optischen Dichte $D_{WP}$ gerade, wie gewünscht, eine Spannung, die dem Weißpegel $U_{WP}$ entspricht. Wird beim Weißabgleich auf die maximale Spannung $U_{GR}$ des Aussteuerungsbereiches abgeglichen, so läßt sich bei einer optischen Dichte $D_{WP}$ des Weißpunktes, die der Grenzdichte $D_{GR}$ entspricht, entsprechend dem Verlauf der Abgleichgeraden (35) gerade noch der Weißpegel $U_{WP}$ erreichen.

## Patentansprüche

1.　Verfahren zum Vleißabgleich eines optoelektronischen Farb-Abtastorgans eines Farbscanners zur bildpunkt- und zeilenweisen Abtastung einer von einer Abtastlichtquelle beleuchteten Farbvorlage zur trichromatischen Aufspaltung des mit den optischen Dichten der abgetasteten Bildpunkte modulierten und durch eine Scanblende begrenzten Abtastlichtes in Farbanteile für jeden Farbkanal und zur Umwandlung der Farbanteile in Farbsignale mittels einer Licht/Spannungs-Wandlereinrichtung in jedem Farbkanal. bei dem für jeden Farbanteil ein Weißpegel vorgegeben und die Farbsignale derart eingestellt werden, daß sie bei Abtastung des Weißpunktes, der hellsten Stelle, der abgetasteten Farbvorlage den vorgegebenen Weißpegeln entsprechen

   **<u>dadurch gekennzeichnet</u>, daß**

   -　die optischen Dichten ($D_{WP}$) der drei Farbanteile des Weißpunktes der Farbvorlage (2) ausgemessen werden,
   -　aus den ausgemessenen optischen Dichten ($D_{WP}$) des Weißpunktes der Farbvorlage (2) und den vorgegebenen Weißpegeln ($U_{WP}$) für die drei Farbanteile Spannungs-Sollwerte ($U_{SOLL}$), welche die in den Licht/Spannungs-Wandlereinrichtungen (16, 17) erzeugten Spannungs-Istwerte ($U_{IST}$) bei der optische Dichte "Null" der Farbvorlage (2) erreichen sollen, nach folgender Gleichung berechnet werden:

   $$U_{SOLL} = U_{WP} \times 10 \exp. [D_{WP}]$$

   -　mittels einer Lichtquelle Abtastlicht mit einer Intensität erzeugt wird, welche die optische Dichte "Null" der Farbvorlage (2) repräsentiert,
   -　das die optische Dichte "Null" repräsentierende Abtastlicht in den Licht/Spannungs-Wandlereinrichungen (16, 17) in die Farbsignale als Spannungs-Istwerte ($U_{IST}$) für die einzelnen Farbanteile umgesetzt wird,
   -　die Spannungs-Istwerte ($U_{IST}$) mit den berechneten Spannungs-Sollwerten ($U_{SOLL}$) verglichen werden und
   -　die Verstärkungen der Licht/Spannungs-Wandlereinnchtungen (16, 17) in den drei Farbkanälen derart eingestellt und für die Dauer der nachfolgenden Vorlagenabtastung konstant gehalten werden, daß die Spannungs-Istwerte ($U_{IST}$), die bei dem die optische Dichte "Null" der Farbvorlage (2) repräsentierenden Abtastlicht erzeugt werden, gleich den berechneten Spannungs-Sollwerten ($U_{SOLL}$) sind. wodurch erreicht wird. daß die bei der späteren Vorlagenabtastung gewonnenen Farbsignale des Weißpunktes der Farbvorlage (2) den vorgegebenen Weißpegeln ($U_{WP}$) entsprechen

2.　Verfahren nach Anspruch 1. <u>**dadurch gekennzeichnet, daß**</u> die optischen Dichten ($D_{WP}$) des Weißpunktes der Farbvorlage (2) durch Abtastung der hellsten Bildstelle in der Farbvorlage (2) mit dem Farb-Abtastorgan (3) des Farbscanners ausgemessen werden.

3. Verfahren nach Anspruch 1, **dadurch gekennzeichnet, daß**

- die Farbvorlage (2) punkt- und zeilenweise mit dem Farb-Abtastorgan (3) des Farbscanners abgetastet wird,
- die dabei gewonnenen Farbsignale digitalisiert und die digitalen Farbwerte gespeichert werden und
- die optischen Dichten ($D_{WP}$) des Weißpunktes der Farbvorlage (2) durch eine Vorlagenanalyse anhand der gespeicherten digitalen Farbwerte ermittelt werden.

4. Verfahren nach einem der Ansprüche 1 bis 3, **dadurch gekennzeichnet, daß** das Abtastlicht mit der optische Dichte "Null" der Farbvorlage (2) von der Abtastlichtquelle (4) des Farbscanners erzeugt wird.

5. Verfahren nach einem der Ansprüche 1 bis 4, **dadurch gekennzeichnet, daß**

- für eine Anzahl von Abgleichblenden (11) mit unterschiedlichen Blendendurchmessern jeweils eine Blendendichte ($D_{BL}$) für jeden Farbkanal als Maß für die mit der jeweiligen Abgleichblende (11) erzielbare Abschwächung des Abtastlichtes ermittelt und die Blendendichten ($D_{BL}$) den Abgleichblenden (11) in einer Blendendichte-Tabelle zugeordnet werden.
- für jeden Farbkanal die Grenzen der Aussteuerungsbereiches der Licht/Spannungs-Wandlereinrichtungen (16, 17) kennzeichnende optische Grenzdichten ($D_{GR}$) festgelegt werden,
- die ausgemessenen optischen Dichten ($D_{WP}$) des Weißpunktes der Farbvorlage (2) mit den festgelegten optischen Grenzdichten ($D_{GR}$) verglichen werden,
- falls die optischen Dichten ($D_{WP}$) des Weißpunktes größer als die optischen Grenzdichten ($D_{GR}$) sind, entsprechende optische Abgleichdichten ($D_O$) als Differenz zwischen den optischen Dichten ($D_{WP}$) des Weißpunktes und den Grenzdichten ($D_{GR}$) ermittelt werden,
- aus der Blendendichte-Tabelle eine Abgleichblende (11) ausgewählt wird. deren Blendendichte ($D_{BL}$) mindestens einen definierten Dichteabstand zu der Blendendichte ($D_{SC}$) der bei der Vorlagenabtastung verwendeten Scanblende (11) aufweist, und die ausgewählte Abgleichblende (11) in den Strahlengang des Abtastlichtes eingebracht wird,
- das die optische Dichte "Null" repräsentierende Abtastlicht durch die ausgewählte Abgleichblende (11) mindestens auf die optischen Abgleichdichten ($D_O$) abgeschwächt wird und
- der Weißabgleich durch Einstellung der Verstärkung der Licht/Spannungs-Wandiereinrichtungen (16, 17) anhand des abgeschwächten Abtastlichtes durchgeführt wird.

6. Verfahren nach Anspruch 5, **dadurch gekennzeichnet, daß** aus der Blendendichte-Tabelle diejenige Abgleichblende (11) ausgewählt wird, deren größere zugeordnete Blendendichte ($D_{BL}$) mindestens den Dichteabstand zu der bei der Vorlagenabtastung verwendeten Scanblende (11) von der Größe der Abgleichdichte ($D_O$) aufweist.

7. Verfahren nach Anspruch 5 oder 6, **dadurch gekennzeichnet, daß** zur Erhohung der Genauigkeit des Weißabgleichs

- eine ungenaue Dichteanpassung der Abgleichblenden (11) durch korngierte Spannungs-Sollwerte ($U_{SOLL}$) kompensiert wird und
- die korrigierten Spannungs-Sollwerte ($U_{SOLL}$) für jeden Farbkanal aus dem vorgegeben Weißpegel ($U_{WP}$), der optischen Dichte ($D_{WP}$) des Weißpunktes, der Blendendichte ($D_{AB}$) der ausgewählten Abgleichblende (11) und der Blendendichte ($D_{SC}$) der Scanblende nach folgender Gleichung berechnet werden:

$$U_{SOLL} = U_{WP} \times 10 \exp. [D_{WP} - (D_{AB} - D_{SC})].$$

8. Verfahren nach einem der Ansprüche 5 bis 7, **dadurch gekennzeichnet, daß** die Grenzdichten ($D_{GR}$) jeweils dem logarithmierten Quotienten aus der maximalen Spannung ($U_{GR}$) des Aussteuerungsbereiches der Licht/Spannungs-Wandlereinrichtung (16, 17) und dem zugehörigen Weißpegel ($U_{WP}$) entspricht.

9. Verfahren nach einem der Ansprüche 5 bis 8, **dadurch gekennzeichnet, daß** als Abgleichblenden die Scanblenden (11) eines Blendenrades (12) des Farbscanners verwendet werden.

**10.** Verfahren nach einem der Ansprüche 5 bis 9, **dadurch gekennzeichnet, daß** die Blendendichte-Tabelle relative Blendendichten ($D_{BL}$) enthält, die jeweils aus dem Verhältnis der absoluten Blendendichten der entsprechenden Abgleichblenden (11) zu der Blendendichte einer aus der Anzahl von Abgleichblenden ausgewählten Referenzblende ermittelt werden.

**11.** Verfahren nach Anspruch 10, **dadurch gekennzeichnet, daß** zur Ermittlung der relativen Blendendichten ($D_{BL}$)

- die Abgleichblenden (11) nacheinander in den Strahlengang des Abtastlichtes gebracht werden,
- bei minimal eingestellter Verstarkung eines der Licht/Spannungs-Wandlereinrichtungen (16, 17) die Ausgangsspannungen (U) der Licht/Spannungs-Wandlereinrichtung (16, 17) gemessen werden.
- die Abgleichblende (11) mit der maximalen Ausgangsspannung (U) als Referenzblende ausgewählt und in den Strahlengang des Abtastlichtes gebracht wird,
- die Verstärkung der Licht/Spannungs-Wandlereinrichtung (16, 17) derart eingestellt wird, daß die Ausgangsspannung (U) bei der Referenzblende einem vorgegebenen Sollwert entspricht.
- die Abgleichblenden (11) erneut in den Strahlengang des Abtastlichtes gebracht und die Ausgangsspannungen (U) mit der eingestellten Verstärkung erneut gemessen werden, wobei die logarithmierten Ausgangsspannungen (U) die absoluten Blendendichten der Abgleichblenden bzw. der Referenzblende sind und
- die relative Blendendichten ($D_{BL}$) jeweils aus dem Verhältnis der absoluten Blendendichten der entsprechenden Abgleichblenden zu der absoluten Blendendichte der Referenzblende ermittelt werden.

**Claims**

**1.** Method for white balancing an optoelectronic colour scanning unit of a colour scanner for dot-by-dot and line-by-line scanning of colour copy illuminated by a scanning light source for trichromatic splitting of the scanning light — modulated by the optical densities of the scanned image dots and limited by a scanning aperture — into chromatic components for each colour channel and for conversion of the chromatic components into colour signals by means of a light/voltage converter device in each colour channel, wherein a white level is specified for each chromatic component and the colour signals are set so that they correspond to the specified light levels when the white point — the brightest spot on the scanned colour copy — is scanned, **characterized in that**

- the optical densities ($D_{WP}$) of the three chromatic components of the white point of the colour copy (2) are measured,
- required voltage values ($U_{SOLL}$) to be attained by the actual voltage values ($U_{IST}$) generated in the light/voltage converter devices (16, 17) when the optical density of the colour copy (2) is "zero" are computed for the three chromatic components from the measured optical densities ($D_{WP}$) of the white point of the colour copy (2) and the specified white levels ($U_{WP}$), in accordance with the following equation:

$$U_{SOLL} = U_{WP} \times 10 \exp. [D_{WP}],$$

- scanning light with an intensity which represents an optical density of the colour copy (2) of "zero" is generated by means of a light source,
- the scanning light representing "zero" optical density is converted into the colour signals in the light/voltage converter devices (16, 17) as actual voltage values ($U_{IST}$) for the individual chromatic components,
- the actual voltage values ($U_{IST}$) are compared with the computed required voltage values ($U_{SOLL}$) and
- the amplifications of the light/voltage converter devices (16, 17) in the three colour channels are set, and kept constant for the duration of the ensuing scanning of copy, so that the actual voltage values ($U_{IST}$) generated for the scanning light representing "zero" optical density of the colour copy (2) are equal to the computed required voltage values ($U_{SOLL}$), and as a result the colour signals of the white point of the colour copy (2) obtained in the subsequent scanning of copy correspond to the specified white levels ($U_{WP}$).

**2.** Method according to Claim 1, **characterized in that** the optical densities ($D_{WP}$) of the white point of the colour copy (2) are measured by scanning the brightest image spot in the colour copy (2) with the colour scanning unit (3) of the colour scanner.

**3.** Method according to Claim 1, **characterized in that**

- the colour copy (2) is scanned dot by dot and line by line with the colour scanning unit (3) of the colour scanner,
- the colour signals thus obtained are digitized and the digital tristimulus values are stored, and
- the optical densities ($D_{WP}$) of the white point of the colour copy (2) are determined by a copy analysis on the basis of the stored digital tristimulus values.

4. Method according to any one of Claims 1 to 3, **characterized in that** the scanning light with "zero" optical density of the colour copy (2) is generated by the scanning light source (4) of the colour scanner.

5. Method according to any one of Claims 1 to 4, **characterized in that**

- an aperture density ($D_{BL}$) for each colour channel is determined for each one of a number of balancing apertures (11) with different aperture diameters as a measure of the attenuation of scanning light obtainable with the balancing aperture (11) in question, and the aperture densities ($D_{BL}$) are assigned to the balancing apertures (11) in an aperture density table,
- the optical limit densities ($D_{GR}$) characterizing the limits of the dynamic range of the light/voltage converter devices (16, 17) are determined for each colour channel,
- the measured optical densities ($D_{WP}$) of the white point of the colour copy (2) are compared with the optical limit densities ($D_{GR}$) determined,
- if the optical densities ($D_{WP}$) of the white point are greater than the optical limit densities ($D_{GR}$), corresponding optical balancing densities ($D_O$) are determined as the difference between the optical densities ($D_{WP}$) of the white point and the limit densities ($D_{GR}$),
- a balancing aperture (11) with an aperture density ($D_{BL}$) differing by at least a defined density-interval from the aperture density ($D_{SC}$) of the scanning aperture (11) used in the copy scanning is chosen from the aperture density table, and the chosen balancing aperture (11) is placed in the ray path of the scanning light,
- scanning light representing "zero" optical density is attenuated at least to the optical balancing densities ($D_O$) by the chosen balancing aperture (11), and
- white balance is effected by adjusting the amplification of the light/voltage converter devices (16, 17) with the aid of the attenuated scanning light.

6. Method according to Claim 5, **characterized in that** the balancing aperture (11) chosen from the aperture density table is one whose greater assigned aperture density ($D_{BL}$) differs from the scanning aperture (11) used in the copy scanning by a density-interval of the magnitude of the balancing density ($D_O$).

7. Method according to Claim 5 or Claim 6, **characterized in that** in order to increase the precision of the white balance

- imprecise density matching of the balancing apertures (11) is compensated by corrected required voltage values ($U_{SOLL}$), and
- corrected required voltage values ($U_{SOLL}$) are computed for each colour channel from the specified white level ($U_{WP}$), the optical density ($D_{WP}$) of the white point, the aperture density ($D_{AB}$) of the chosen balancing aperture (11) and the aperture density ($D_{SC}$) of the scanning aperture, in accordance with the following equation:

$$U_{SOLL} = U_{WP} \times 10 \exp{[D_{WP} - (D_{AB} - D_{SC})]}.$$

8. Method according to any one of Claims 5 to 7, **characterized in that** each limit density ($D_{GR}$) corresponds to the logarithmic ratio of the maximum voltage ($U_{GR}$) of the dynamic range of the light/voltage converter device (16, 17) to the relevant white level ($U_{WP}$).

9. Method according to any one of Claims 5 to 8, **characterized in that** the scanning apertures (11) of an aperture wheel (12) of the colour scanner are used as balancing apertures.

10. Method according to any one of Claims 5 to 9, **characterized in that** the aperture density table contains relative aperture densities ($D_{BL}$) each determined from the ratio of the absolute aperture density of the corresponding balancing aperture (11) to the aperture density of a reference aperture chosen from among the balancing apertures.

11. Method according to Claim 10, **characterized in that** in order to determine the relative aperture densities ($D_{BL}$)

- balancing apertures (11) are successively placed in the ray path of the scanning light,
- h the amplification of one of the light/voltage converter devices (16, 17) set to a minimum, the output voltages (U) of the light/voltage converter device (16, 17) are measured,
- balancing aperture (11) with the highest output voltage (U) is chosen as reference aperture and is placed in the ray path of the scanning light,
- amplification of the light/voltage converter device (16, 17) is adjusted so that the output voltage (U) with the reference aperture corresponds to a specified required value,
- balancing apertures (11) are again placed in the ray path of the scanning light and the output voltages (U) are again measured with the adjusted amplification, the logarithmic output voltages (U) being the absolute aperture densities of the balancing apertures or reference aperture as the case may be, and
- each relative aperture density ($D_{BL}$) is determined from the ratio of the absolute aperture density of the corresponding balancing aperture to the absolute aperture density of the reference aperture.

**Revendications**

1. Procédé de calibrage (équilibrage des blancs) d'un organe de détection des couleurs d'un scanner couleur pour la détection point par point et ligne par ligne d'un document en couleurs éclairé par une source de lumière de détection pour l'analyse trichromatique de la lumière de détection modulée par la densité optique des points images détectés et limitée par un diaphragme de balayage, en composantes de couleur pour chaque canal couleur et pour convertir les composantes de couleur en signaux de couleur par une installation de conversion lumière/tension pour chaque canal couleur,
selon lequel, pour chaque composante de couleur, on prédétermine un niveau de blanc et on règle les signaux de couleur de façon qu'à la détection du point blanc correspondant au point le plus clair, ils correspondent au niveau du blanc prédéterminé du modèle de couleur détecté,
**caractérisé en ce que**

- on mesure les densités optiques ($D_{WP}$) des trois composantes de couleur du point blanc du modèle en couleur (2)
- à partir des densités optiques mesurées ($D_{WP}$) du point blanc du modèle en couleur (2) et des niveaux de blanc prédéterminés ($U_{WP}$) on calcule des valeurs de consigne de tension ($U_{CONS}$) des trois composantes de couleur, et qui doivent atteindre la valeur réelle de tension ($U_{réel}$), générée dans les installations de conversion lumière/tension (16, 17) pour la densité optique (« 0 ») du modèle en couleur (2), selon l'équation suivante :

$$U_{CONS} = U_{WP} \times 10 \exp . [D_{WP}],$$

- à l'aide d'une source lumineuse on génère la lumière de détection avec une intensité représentant la densité optique (« zéro ») du modèle en couleur (2),
- on convertit la lumière de détection représentant la densité optique (« zéro ») dans les installations de conversion lumière/tension (16, 17) des signaux de couleur en valeur réelle de tension ($U_{REEL}$) pour les différentes composantes de couleur,
- on compare les valeurs de tension réelle ($U_{REEL}$) avec les valeurs de consigne de tension, calculées ($U_{CONS}$), et
- on règle les coefficients d'amplification d'une installation de conversion de lumière/tension (16, 17) pour les trois couleurs et on les maintient constantes pendant la durée de la détection suivante du modèle, pour que les valeurs réelles de tension ($U_{REEL}$) obtenues avec la lumière de détection représentant la densité optique (« zéro ») du modèle en couleur (2) soient égales aux valeurs de consigne de tension $U_{CONS}$, calculées, de sorte que les signaux de couleur obtenus lors de la détection ultérieure du modèle, pour le point blanc du modèle en couleur (2), correspondent aux niveaux de blanc prédéterminés ($U_{WP}$).

2. Procédé selon la revendication 1,
**caractérisé en ce qu'**
on mesure les densités optiques ($D_{WP}$) du point blanc du modèle en couleurs (2) par détection du point image le plus clair dans le modèle en couleurs (2) avec l'organe de détection de couleur (3) du scanner couleur.

3. Procédé selon la revendication 1,
**caractérisé en ce qu'**

- on détecte le modèle en couleur (2) point par point et ligne par ligne avec l'organe de détection de couleur (3) du scanner couleur,
- on numérise les signaux couleurs ainsi obtenus et on mémorise les valeurs de couleur numérisées et,
- on détermine les densités optiques ($D_{WP}$) du point blanc du modèle en couleur (2) par une analyse de modèle à l'aide des valeurs de couleur numériques, mises en mémoire

4. Procédé selon l'une des revendications 1 à 3,
   **caractérisé en ce qu'**
   on génère la lumière de détection de densité optique (« 0 ») pour le modèle en couleur (2) par la source de lumière de détection (4) du scanner couleur.

5. Procédé selon l'une des revendications 1 à 4,
   **caractérisé en ce que**
   pour un nombre de diaphragmes d'équilibrage (11) ayant des diamètres de diaphragme différents, on détermine chaque fois une densité de diaphragme ($D_{BL}$) pour chaque canal couleur comme mesure de l'atténuation de la lumière de détection que l'on peut obtenir avec chaque diaphragme d'équilibrage, (11) et on associe les densités de diaphragme ($D_{BL}$) des diaphragmes d'équilibrage (11) à un tableau de densité de diaphragme

   - pour chaque canal couleur, on fixe les limites de la plage de commande couleur des densités limites optique ($D_{GR}$) caractérisant les installations de conversion lumière/tension (16, 17),
   - on compare les densités optiques mesurées ($D_{WP}$) du point blanc du modèle couleur (2) avec les densités limites optiques fixées ($D_{GR}$),
   - si les densités optiques ($D_{WP}$) du point blanc sont plus grandes que les densités limites optiques ($D_{GR}$), on détermine des densités d'équilibrage optique (Do) correspondantes, comme différences entre les densités optiques ($D_{WP}$) du point blanc et les densités limites ($D_{GR}$),
   - on sélectionne un diaphragme d'équilibrage (11) dans le tableau des densités de diaphragme dont la densité de diaphragme ($D_{BL}$) présente au moins un écart de densité déterminé par rapport à l'intensité de diaphragme (Dsc) du diaphragme de balayage (11) utilisé pour la détection du modèle et on place le diaphragme d'équilibrage sélectionné (11) dans le chemin du faisceau de la lumière de détection,
   - on atténue la lumière de détection représentant la densité optique (« zéro ») par le diaphragme d'équilibrage (11) sélectionné, au moins jusqu'à la densité d'équilibrage optique (Do) et,
   - on fait l'équilibrage des blancs par le réglage du coefficient d'amplification des installations de conversion de lumière/tension (16, 17) à l'aide la lumière de détection atténuée.

6. Procédé selon la revendication 5,
   **caractérisé en ce que**
   l'on sélectionne le diaphragme d'équilibrage (11) dans le tableau des densités de diaphragme dont la densité de diaphragme ($D_{PL}$) la plus grande, associée, correspond au moins à l'écart de densité par rapport au diaphragme de balayage (11) utilisé pour la détection de modèle, et ayant la valeur de la densité de l'équilibrage ($D_O$).

7. Procédé selon les revendications 5 ou 6,
   **caractérisé en ce que**
   pour augmenter la précision de l'équilibrage des blancs,

   - on compense une adaptation imprécise de densité des diaphragmes d'équilibrage (11) par des valeurs de consigne de tension ($U_{CONS}$), corrigées et,
   - on calcule les valeurs de consigne de tension corrigées ($U_{CONS}$) pour chaque canal de couleur à partir du niveau de blanc prédéterminé ($U_{WP}$), de la densité optique ($U_{WP}$) du point blanc, de la densité de diaphragme ($D_{AB}$) du diaphragme d'équilibrage sélectionné (11) et de la densité de diaphragme (Dsc) du diaphragme de balayage selon l'équation suivante $U_{CONS} = U_{WP} \times 10$ exp. $[D_{WP} - (D_{AB} - D_{SC})]$.

8. Procédé selon l'une des revendications 5 à 7,
   **caractérisé en ce que**
   les densités limites des indices ($D_{GR}$) correspondent chaque fois au rapport logarithmique de la tension maximale ($U_{GR}$) de la plage de commande de l'installation de conversion lumière/tension (16, 17) et du niveau de blanc correspondant ($U_{WP}$).

9. Procédé selon l'une des revendications 5 à 8,

**caractérisé en ce que**

comme diaphragme d'équilibrage on utilise les diaphragmes de balayage (11) d'une roue de diaphragmes (12) du scanner couleur.

**10.** Procédé selon l'une des revendications 5 à 9,
**caractérisé en ce que**

le tableau des densités de diaphragme contient les densités relatives de diaphragme ($D_{BL}$) obtenues chaque fois par le rapport des densités absolues des diaphragmes d'équilibrage correspondants (11) et des densités d'un diaphragme de référence sélectionnées parmi le nombre de diaphragmes d'équilibrage.

**11.** Procédé selon la revendication 10,
**caractérisé en ce que**

pour déterminer les densités de diaphragme relatives ($D_{BL}$) des diaphragmes

- on place successivement les diaphragmes d'équilibrage (11) dans le faisceau de la lumière de détection,
- pour un coefficient d'amplification réglé au minimum dans l'une des installations de conversion lumière/tension (16, 17) on mesure les tensions de sortie (U) de l'installation de conversion lumière/tension (16, 17),
- on sélectionne le diaphragme d'équilibrage (11) ayant la tension de sortie maximale (U) comme diaphragme de référence et on place ce diaphragme dans le faisceau de la lumière de détection
- on règle le coefficient d'amplification de l'installation de conversion lumière/tension (16, 17) pour que la tension de sortie (U) corresponde à une valeur de consigne prédéterminée pour le diaphragme de référence,
- on place de nouveau les diaphragmes d'équilibrage (11) dans le faisceau de la lumière de détection et on mesure de nouveau les tensions de sorties (U) avec l'amplification réglée et

les tensions de sortie logarithmiques (U) sont les densités absolues des diaphragmes d'équilibrage ou du diaphragme de référence et les densités relatives ($D_{BL}$) des diaphragmes sont chaque fois par le rapport de la densité absolue des diaphragmes d'équilibrage correspondants et de la densité absolue du diaphragme de référence.

Fig. 1

Fig. 2